(19) Europäisches Patentamt
European Patent Office
Office européen des brevets

(11) **EP 2 907 339 B1**

(12) **FASCICULE DE BREVET EUROPEEN**

(45) Date de publication et mention de la délivrance du brevet:
**02.01.2019 Bulletin 2019/01**

(21) Numéro de dépôt: **13785524.3**

(22) Date de dépôt: **08.10.2013**

(51) Int Cl.:
*H04W 28/18* *(2009.01)*    *H04W 76/14* *(2018.01)*
*H04W 72/04* *(2009.01)*    *H04W 92/18* *(2009.01)*

(86) Numéro de dépôt international:
**PCT/FR2013/052394**

(87) Numéro de publication internationale:
**WO 2014/057209 (17.04.2014 Gazette 2014/16)**

(54) **PROCÉDÉ DE COMMUNICATION DANS UN RÉSEAU D'ACCÈS AVEC DES COMMUNICATIONS D2D, STATION DE BASE ET SUPPORT D'INFORMATIONS**

VERFAHREN ZUR KOMMUNIKATION IN EINEM ZUGANGSNETZ MIT D2D-KOMMUNIKATION UND ENTSPRECHENDE BASISSTATION UND INFORMATIONSMEDIUM

METHOD OF COMMUNICATION IN AN ACCESS NETWORK WITH D2D COMMUNICATIONS, AND CORRESPONDING BASE STATION AND INFORMATION MEDIUM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.10.2012 FR 1259621**

(43) Date de publication de la demande:
**19.08.2015 Bulletin 2015/34**

(73) Titulaire: **Orange**
**75015 Paris (FR)**

(72) Inventeur: **YUAN-WU, Julie**
**F-78000 Versailles (FR)**

(56) Documents cités:
**WO-A1-2011/088609     US-A1- 2010 093 364**

- **MOHAMMAD ZULHASNINE ET AL: "Efficient resource allocation for device-to-device communication underlaying LTE network", WIRELESS AND MOBILE COMPUTING, NETWORKING AND COMMUNICATIONS (WIMOB), 2010 IEEE 6TH INTERNATIONAL CONFERENCE ON, IEEE, PISCATAWAY, NJ, USA, 11 octobre 2010 (2010-10-11), pages 368-375, XP031807946, ISBN: 978-1-4244-7743-2 cité dans la demande**
- **Pekka Janis ET AL: "Interference-Aware Resource Allocation for Device-to-Device Radio Underlaying Cellular Networks", VTC Spring 2009, IEEE 69th Vehicular Technology Conference, 1 April 2009 (2009-04-01), pages 1-5, XP055392807, DOI: 10.1109/VETECS.2009.5073611**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 907 339 B1

**EP 2 907 339 B1**

**Description**

**Domaine de l'invention**

La présente invention se rapporte au domaine des télécommunications. Au sein de ce domaine, l'invention se rapporte plus particulièrement aux réseaux d'accès.

Un réseau d'accès à un système de télécommunication comprend un point d'accès qui fait l'interface entre un terminal et le réseau d'accès. Dans un réseau d'accès cellulaire, parfois dit réseau mobile, le point d'accès est communément appelé station de base.

Un terminal mobile qui veut établir une communication avec un destinataire doit être identifié auprès d'une station de base et doit demander à être servi par la station de base. La station de base peut servir le terminal si elle peut lui allouer une ressource spectrale.

Les réseaux d'accès mobiles sont confrontés à une demande croissante d'établissements de communication qui se traduit par une augmentation de la charge des stations de base. Lorsque la station de base a alloué toutes ses ressources spectrales, elle a atteint la pleine charge. Elle ne peut plus servir de nouveau terminal tant qu'il n'y a pas de libération d'une de ses ressources spectrales.

**Art antérieur**

Récemment, il a été proposé [1] d'introduire la notion de communications en direct (D2D Device To Device selon la terminologie anglosaxonne) entre deux terminaux au sein d'un réseau d'accès. Une paire de terminaux dits D2D établit ainsi une communication sans passer par la station de base. Ceci nécessite que les deux terminaux soient à proximité l'un de l'autre à une distance maximale fonction de la technologie mise en oeuvre pour assurer la transmission.

Ces communications directes ne sont pas sans impact sur les communications établies via la station de base. En effet, elles génèrent des interférences plus particulièrement sur les communications des terminaux qui partagent la même ressource spectrale.

Ces communications directes permettent d'augmenter le nombre de communications au-delà de la pleine charge de la station de base et donc permettent d'améliorer l'efficacité spectrale du réseau d'accès mais elles peuvent impacter les communications relayées par la station de base en générant des interférences qui vont diminuer le rapport signal à bruit et à interférence SINR et donc la qualité de service QoS (Quality Of Service selon la terminologie anglosaxonne) des terminaux servis par la station de base.

Ainsi, la station de base sert des terminaux identifiés dans sa zone de couverture en leur allouant une ressource spectrale, ces terminaux sont désignés par $CU_i$. La station de base est supposée à pleine charge alors que des paires de terminaux identifiées dans sa couverture en attente d'une ressource spectrale sont identifiées par la station de base comme des paires $D2D_j$ en attente.

Pour limiter l'impact des interférences, il est connu une méthode heuristique [2] mise en oeuvre par la station de base. Selon la méthode heuristique, la station de base ordonne dans une liste les terminaux CUs identifiés, c'est-à-dire ceux auxquels la station de base a alloué une ressource spectrale, par gains de canal ($g_{i,B}$) décroissants. En considérant le premier terminal $CU_1$ dans la liste, la méthode cherche ensuite une paire de terminaux D2Dj pour partager la ressource spectrale du premier terminal. La station de base recherche dans l'ensemble des paires D2Dj en attente celle qui a le plus petit gain de canal du lien d'interférence $h_{ij}$, lien d'interférence qui intervient lorsque le terminal $CU_i$ émet à destination de la station de base et qu'un terminal de la paire D2Dj est en réception de l'émission de l'autre terminal de la paire. Si les critères de qualité de service QoS (SINR) minimums associés à ces deux communications sont satisfaits, alors la station de base autorise cette paire de terminaux D2Dj à partager le spectre du premier terminal $CU_1$ et supprime cette paire de terminaux $D2D_j$ de l'ensemble des paires de terminaux $D2D_j$ en attente. La méthode répète les étapes précédentes pour le deuxième terminal $CU_2$. Et ainsi de suite, pour toutes les paires de terminaux $D2D_j$ en attente à moins que l'algorithme soit stoppé s'il a atteint la fin de la liste des terminaux CUs.

Un mécanisme d'obtention de $h_{i,j}$, le gain de canal du lien d'interférence d'un terminal $CU_i$ au récepteur de la paire $D2D_j$ par l'utilisation de symboles pilotes insérés dans les trames radio avec remontée de la valeur de gain déterminée par le terminal D2D à la station de base est connu de IEEE « Interference-aware resource allocation for device-to-device radio underlaying cellular networks » de Jänis, Koivunen, Ribeiro, Korhonen, Doppler, Hugl, publié en 2009. L'article IEEE « Design Aspects of Network Assisted Device-to-Device Communications » de Gábor Fodor, Erik Dahlman, Gunnar Mildh, Stefan Parkvall, Norbert Reider, György Miklós et Zoltán Turányi, publié en mars 2012 dans la revue Communications Magazine décrit l'utilisation de signaux de référence pour la détermination de $g_j$, le gain de canal entre les terminaux d'une paire $D2D_j$ de manière comparable à l'utilisation faite dans le LTE des signaux de référence de démodulation UL (DMRS) qui sont intégrés dans le signal de transmission.

**Exposé de l'invention**

L'invention propose une technique qui maximise le débit global du réseau d'accès tout en garantissant une QoS tout aussi bien aux terminaux servis par une station de base du réseau d'accès qu'aux paires de terminaux qui sont autorisés à communiquer en direct en partageant une ressource spectrale de la voie montante d'un terminal servi.

L'invention a pour objet un procédé de communication mis en oeuvre par une station de base d'un réseau d'accès pour allouer des ressources spectrales de la voie montante entre des terminaux identifiés par la station. Certains de ces terminaux identifiés auxquels la station a alloué toutes ses ressources spectrales ont une communication établie via la station de base. Ces terminaux CU sont dits servis. Ce procédé est capturé par la révendication 1, et comprend notamment

- un contrôle d'admission d'une paire $D2D_j$ de terminaux candidats à une communication en direct comprenant la détermination d'un ensemble de terminaux servis candidats au partage de leurs ressources spectrales respectives avec la paire $D2D_j$ de terminaux sous la seule contrainte du respect par le terminal candidat et par la paire de leurs critères respectifs de QoS.

L'invention concerne aussi une station de base SB telle qu'elle est décrite par la revendication 8. Notamment, la station de base SB connait les terminaux actifs dans sa zone de couverture radio compte tenu des échanges dans le canal de signalisation parfois désigné par voie de retour. Ces terminaux sont dits identifiés. Généralement, la station de base identifie ces terminaux en récupérant un identifiant fourni par tout terminal qui cherche à accéder au réseau d'accès. Selon le type du réseau d'accès, l'identifiant correspond par exemple au MSISDBN, plus communément désigné par les termes numéro de téléphone. La station de base connaît en outre les destinataires des communications demandées par les différents terminaux identifiés. La station de base est donc en mesure de détecter des paires de terminaux situés dans sa zone de couverture qui sollicitent l'établissement d'une communication et qui sont donc susceptibles de mettre en oeuvre une communication en directe sans passer par la station de base.

De manière avantageuse, la station détermine l'ensemble de tous les terminaux servis qui sont candidats à partager leurs ressources spectrales respectives avec une paire $D2D_j$ de terminaux tout en respectant un critère de QoS aussi bien pour le terminal candidat que pour la paire de terminaux. Ce critère de QoS est par exemple chiffré par une valeur de SINR minimale pour un débit donné.

Ainsi, le procédé détermine tous les terminaux servis candidats au partage de leurs ressources spectrales avec une paire de terminaux. Contrairement aux techniques connues, le procédé selon l'invention ne retient pas systématiquement le terminal candidat qui provoque le moins d'interférence sur les signaux reçus par la paire de terminaux susceptible de partager la même ressource spectrale mais détermine un ensemble de terminaux candidats pour lesquels le critère de QoS est atteint malgré la perturbation que peut percevoir la paire de terminaux.

Un terminal ne peut être candidat selon le procédé que si la paire de terminaux respecte son critère de QoS malgré la perturbation que peut occasionner le terminal candidat et que si la station de base constate que le critère de QoS du terminal servi est respecté. Ainsi, le procédé permet de prendre en compte une ou plusieurs autres contraintes pour sélectionner un terminal candidat optimal parmi l'ensemble des terminaux candidats qui permet d'atteindre un débit global optimal contrairement aux techniques connues qui peuvent ignorer certains candidats à plus haut potentiel parmi les terminaux servis (un candidat à plus haut potentiel est un terminal CU servi qui peut conduire à un débit somme des communications de ce terminal servi et de la paire D2D considérée plus important que le débit somme du terminal CU servi désigné et de la paire D2D considérée tout en respectant les critères de QoSs concernés)..

Si l'ensemble de terminaux candidats est vide, la paire $D2D_j$ de terminaux n'est pas autorisée à communiquer en direct et elle doit attendre et renouveler ultérieurement sa demande d'établissement de communication auprès de la station de base. En effet, la station de base a déjà alloué toutes ses ressources spectrales, elle ne peut pas par conséquent servir cette paire de terminaux et en l'absence d'au moins un terminal candidat au partage de sa ressource spectrale avec respect d'un critère de QoS, elle ne peut pas autoriser une communication en direct.

Lorsqu'il y a plusieurs paires $D2D_j$ de terminaux candidats à une communication en direct, le contrôle d'admission peut être effectué pour les différentes paires de terminaux. Le contrôle conduit alors à autant d'ensembles de terminaux candidats que de paires de terminaux pour lesquelles l'admission est contrôlée.

Selon un mode de réalisation, le procédé comprend en outre pour une paire $D2D_j$ admissible et par terminal $CU_i$ de l'ensemble de cette paire, une détermination d'un couple de puissances d'émission associées respectivement au terminal $CU_i$ et à la paire $D2D_j$ tel que le couple correspond à la somme maximale des débits du terminal $CU_i$ et de la paire $D2D_j$.

Ainsi, un procédé selon l'invention, traite séparément la contrainte de QoS et la détermination des niveaux de puissance d'un terminal candidat et de la paire pour atteindre un débit somme maximal. Cette séparation permet de simplifier le problème initial d'atteinte d'un débit global optimal des communications servies par la station de base à pleine charge et des communications en direct autorisées avec partage d'une ressource spectrale déjà allouée.

Selon un mode de réalisation particulier, un terminal $CU_i$ appartient à l'ensemble s'il vérifie le système suivant d'équations :

$$\begin{cases} 0 \le \dfrac{(g_j \xi_{i,\min}^c + h_{j,B} \xi_{i,\min}^c \xi_{j,\min}^d) \sigma_N^2}{g_j g_{i,B} - \xi_{i,\min}^c \xi_{j,\min}^d h_{i,j} h_{j,B}} \le P_{\max}, \\[4mm] 0 \le \dfrac{(h_{i,j} \xi_{i,\min}^c \xi_{j,\min}^d + g_{i,B} \xi_{j,\min}^d) \sigma_N^2}{g_j g_{i,B} - \xi_{i,\min}^c \xi_{j,\min}^d h_{i,j} h_{j,B}} \le P_{\max}. \end{cases}$$

avec :

$g_j$, le gain de canal entre les terminaux de la paire $D2D_j$,
$g_{i,B}$, le gain de canal entre le terminal $CU_i$ et la station de base sur la voie montante,
$h_{j,B}$, le gain de canal du lien d'interférence de l'émetteur de la paire $D2D_j$ à la station de base,
$h_{i,j}$, le gain de canal du lien d'interférence d'un terminal $CU_i$ au récepteur de la paire $D2D_j$,
$\sigma_N$, la puissance du bruit blanc gaussien additif sur chaque canal,
$P_{\max}$, la puissance d'émission maximale d'un terminal,
$\xi_{j,\min}^d$ le niveau de SINR minimum requis par la paire $D2D_j$,
$\xi_{i,\min}^c$ le niveau de SINR minimum requis par un terminal $CU_i$.

La station détermine ainsi de manière déterministe l'ensemble des terminaux candidats.

La station de base SB mémorise des données caractéristiques des terminaux identifiés selon des mécanismes connus déployés dans les réseaux d'accès tels en particulier l'émission de signaux pilotes qui permet de connaitre le gain d'un canal. Elle connaît ainsi le gain de canal entre les terminaux d'une paire D2Dj, noté $g_j$, c'est-à-dire lorsqu'un des terminaux de la paire émet et l'autre reçoit, le gain de canal entre le terminal CUi et la station de base sur la voie montante, noté $g_{i,B}$, c'est-à-dire lorsque le terminal CUi émet et la station de base reçoit, le gain de canal du lien d'interférence de l'émetteur de la paire D2Dj à la station de base, noté $h_{j,B}$, c'est-à-dire lorsqu'un terminal de la paire émet à destination de l'autre terminal de la paire alors que la station de base reçoit une émission du terminal CUi, le gain de canal du lien d'interférence du terminal CUi au récepteur de la paire $D2D_j$, noté hi,j, c'est-à-dire lorsque le terminal CUi émet à destination de la station de base alors qu'un terminal de la paire est en réception de l'émission de l'autre terminal de la paire, la puissance du bruit blanc gaussien additif sur chaque canal, noté $\sigma_N$, la puissance d'émission maximale d'un terminal, notée $P_{\max}$, le niveau de SINR minimum requis par une paire $D2D_j$ noté $\xi_{j,\min}^d$, le niveau de SINR minimum requis par un terminal CUi, noté, $\xi_{i,\min}^c$.

Selon un mode de réalisation particulier, un terminal $CU_i$ appartient à l'ensemble si sa distance au terminal récepteur de la paire de terminaux est supérieure ou égale à la distance déterminée par le système suivant d'équations :

$$L_{i,jRx}^{\min} = \begin{cases} \left[ \dfrac{K \xi_{i,\min}^c \xi_{j,\min}^d P_{\max}}{(P_{\max} g_{i,B} - \xi_{i,\min}^c \sigma_N^2)\beta - \xi_{i,\min}^c \xi_{j,\min}^d \sigma_N^2} \right]^{\frac{1}{\alpha}} & \text{si} \quad \dfrac{P_{\max} g_{i,B}}{\sigma_N^2 + P_{\max} h_{j,B}} \le \xi_{i,\min}^c \ \text{ou,} \\[6mm] \left[ \dfrac{K \xi_{i,\min}^c \xi_{j,\min}^d (\sigma_N^2 + P_{\max} h_{j,B})}{g_{i,B}(P_{\max} g_j - \xi_{j,\min}^d \sigma_N^2)} \right]^{\frac{1}{\alpha}} & \text{si} \quad \dfrac{P_{\max} g_{i,B}}{\sigma_N^2 + P_{\max} h_{j,B}} > \xi_{i,\min}^c, \end{cases}$$

avec $\beta = \dfrac{g_j}{h_{j,B}}$ le facteur de gain entre le gain de canal de la paire $D2D_j$ et le gain de canal du lien d'interférence de l'émetteur de la paire $D2D_j$ à la station de base, avec $\alpha$ un affaiblissement de propagation et $K$ une constante déterminée par des paramètres du réseau d'accès.

Ce mode est particulièrement adapté lorsqu'un modèle de propagation est pris en compte par la station de base et que ce modèle de propagation est tel que le gain de canal entre deux entités m et n est donné par la relation suivante : $g_{m,n} = K \cdot L_{m,n}^{-\alpha}$ avec $\alpha$ un affaiblissement de propagation et $K$ une constante déterminée par des paramètres du réseau d'accès.

Selon un mode de réalisation particulier, pour une paire $D2D_j$, le procédé détermine les couples optimaux de puissances d'émission associées respectivement à un terminal $CU_i$ candidat et à la paire $D2D_j$ selon le système suivant

d'équations :

$$(P_i^{c*}, P_j^{d*}) = \begin{cases} \arg \max\limits_{(P_i^c, P_j^d) \in P_1} f(P_i^c, P_j^d) & \text{si} & \dfrac{P_{\max} g_{i,B}}{\sigma_N^2 + P_{\max} h_{j,B}} \leq \xi_{i,\min}^c \quad \text{ou} \\[2em] \arg \max\limits_{(P_i^c, P_j^d) \in P_2} f(P_i^c, P_j^d) & \text{si} & \dfrac{P_{\max} g_{i,B}}{\sigma_N^2 + P_{\max} h_{j,B}} > \xi_{i,\min}^c \ \text{et} \ \dfrac{P_{\max} g_j}{\sigma_N^2 + P_{\max} h_{i,j}} > \xi_{j,\min}^d \ \textit{ou} \\[2em] \arg \max\limits_{(P_i^c, P_j^d) \in P_3} f(P_i^c, P_j^d) & \text{si} & \dfrac{P_{\max} g_{i,B}}{\sigma_N^2 + P_{\max} h_{j,B}} > \xi_{i,\min}^c \ \text{et} \ \dfrac{P_{\max} g_j}{\sigma_N^2 + P_{\max} h_{i,j}} \geq \xi_{j,\min}^d \end{cases}$$

avec :

$$P_1 = \{(P_{\max}, P_1), (P_{\max}, P_2)\},$$

$$P_2 = \{(P_3, P_{\max}), (P_4, P_{\max})\},$$

$$P_3 = \{(P_{\max}, P_1), (P_{\max}, P_{\max}), (P_4, P_{\max})\},$$

$$P_1 = \frac{(\sigma_N^2 + P_{\max} h_{i,j}) \xi_{j,\min}^d}{g_j},$$

$$P_2 = \frac{P_{\max} g_{i,B} - \xi_{i,\min}^c \sigma_N^2}{\xi_{i,\min}^c h_{j,B}},$$

$$P_3 = \frac{P_{\max} g_j - \xi_{j,\min}^d \sigma_N^2}{\xi_{j,\min}^d h_{i,j}},$$

$$P_4 = \frac{(\sigma_N^2 + P_{\max} h_{j,B}) \xi_{i,\min}^c}{g_{i,B}},$$

$$f(P_i^c, P_j^d) \equiv \log_2(1 + \xi_i^c) + \log_2(1 + \xi_j^d)$$

la fonction somme des débits respectivement d'un terminal candidat et de la paire de terminaux D2Dj.

Ce mode de réalisation permet de déterminer de manière simple les couples optimaux de puissance qui maximisent la somme des débits de la communication du terminal candidat et de la communication en direct de la paire.

Selon un mode de réalisation, le procédé comprend en outre une détermination du terminal optimal d'un ensemble qui respecte un critère de débit local.

Ce mode est plus particulièrement adapté au cas où il n'y a qu'une paire D2Dj de terminaux admissible ou au cas où il y a plusieurs paires de terminaux admissibles pour lesquelles les ensembles de terminaux candidats sont disjoints,

Parmi un ensemble de terminaux candidats, le procédé détermine le candidat optimal vis-à-vis d'une paire, c'est-à-dire celui qui respecte un critère de débit local. Ce critère de débit local correspond à l'augmentation de débit entre d'une part la somme des débits atteints par le terminal et la paire de terminaux et d'autre part le débit atteint par le terminal en l'absence de partage de ressource spectrale avec la paire de terminaux ; ce candidat optimal vis-à-vis de la paire permet donc d'atteindre le gain de débit local le plus important..

Ce mode permet donc d'autoriser la communication en direct entre les terminaux d'une paire admissible tout en assurant un débit optimal du réseau grâce à la détermination, parmi les terminaux candidats suite au contrôle d'admission, du terminal candidat qui optimise un critère de débit local.

Selon un mode de réalisation particulier, la détermination du terminal optimal est effectuée pour tous les ensembles disjoints. Ce mode est plus particulièrement adapté aux cas où il y a plusieurs paires de terminaux admissibles pour lesquelles certains ensembles de terminaux candidats sont disjoints,

Selon un mode de réalisation particulier, le procédé comprend en outre une détermination conjointe des terminaux des ensembles qui permettent d'atteindre une augmentation maximale de débit local au moyen d'un algorithme d'optimisation de poids.

Ce mode de réalisation est plus particulièrement adapté aux cas où il y a plusieurs paires de terminaux admissibles pour lesquelles certains ensembles de terminaux candidats ne sont pas disjoints. En effet, dans ce cas la détermination d'un terminal optimal pour une paire sous la seule contrainte du respect d'un critère de débit local peut poser un problème si ce terminal s'avère être simultanément optimal pour une autre paire.

Par suite, selon ce mode le procédé fait appel à un algorithme d'optimisation de poids connu par l'homme de l'art. Un tel algorithme est basé généralement sur un graphe de bipartisme. Ce graphe présente alors sur une ligne chaque paire de terminaux D2Dj et sur une autre ligne en regard les terminaux candidats. Un lien est tiré entre une paire et un terminal lorsque ce terminal est un candidat au partage de ressource avec la paire. Le gain de débit, qui est la différence entre d'une part la somme maximale des débits atteints par le terminal et par la paire lors d'un partage de ressource et d'autre part le débit maximal atteint par le terminal en l'absence de partage de ressource, est considéré comme le poids associé au lien sur le graphe entre le terminal et la paire de terminaux D2Dj.

Un tel algorithme permet de déterminer les terminaux optimaux, c'est-à-dire pour lesquels le gain du débit global du réseau d'accès est maximal, c'est-à-dire sur l'ensemble constitué des communications établies via la station de base et de la communication établie en direct entre les terminaux de la paire, tout en maximisant les augmentations de débit.

Selon un mode de réalisation particulier, la détermination conjointe est faite groupe d'ensembles non disjoints par groupe d'ensembles non disjoints, c'est-à-dire que les ensembles disjoints sont exclus des groupes d'ensemble non disjoints. Dans la mesure du possible, un groupe d'ensembles non disjoints ne regroupe pas d'ensemble ou d'autre groupe qui peut être disjoint de ce groupe.

L'invention a en outre pour objet une station de base adaptée pour mettre en oeuvre un procédé de communication selon l'invention.

L'invention a en outre pour objet un réseau d'accès comprenant au moins une station de base selon un objet de l'invention.

L'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

Alternativement, le support d'informations peut être un circuit intégré dans lequel le programme est incorporé, le circuit étant adapté pour exécuter ou pour être utilisé dans l'exécution du procédé en question.

D'autre part, le programme peut être traduit en une forme transmissible telle qu'un signal électrique ou optique, qui peut être acheminé via un câble électrique ou optique, par radio ou par d'autres moyens. Le programme selon l'invention peut être en particulier téléchargé sur un réseau de type Internet.

**Liste des figures**

D'autres caractéristiques et avantages de l'invention apparaîtront lors de la description qui suit d'exemples donnés à titre d'exemples non limitatifs, description faite en regard des figures annexées suivantes.

La figure 1 est un schéma d'un réseau d'accès avec une station de base et des terminaux identifiés par cette station.
La figure 2 est un organigramme d'un mode de réalisation d'un procédé selon l'invention.

Les figures 3a et 3b représentent schématiquement les contraintes imposées par les critères de QoS.

Les figures 4a, 4b, 4c représentent trois situations différentes pour la zone d'admissibilité des terminaux candidats à un partage de ressource avec la paire D2D$_j$,

La figure 5 représente un graphe de bipartisme d'un algorithme d'optimisation appliqué à l'union de tous les terminaux candidats et aux paires D2Dj correspondantes.

## Description de modes de réalisation de l'invention

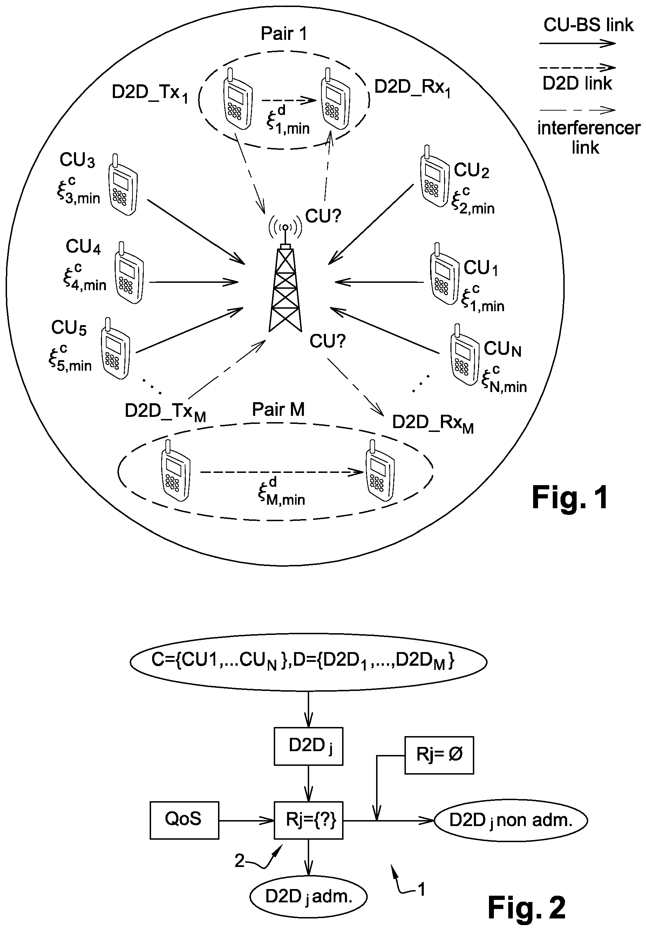

Un réseau d'accès est illustré à la figure 1. Une seule station de base SB est représentée par souci de simplification mais le réseau d'accès peut comprendre d'autres stations de base.

La zone de couverture est représentée de façon très schématique par un cercle centré sur la station de base. Bien entendu cette zone a en réalité un contour qui dépend de l'environnement, cet environnement influe en particulier sur les conditions de propagation et donc sur la portée dans une direction donnée. Les terminaux identifiés par la station de base sont représentés répartis plus ou moins régulièrement autour de la station de base. Il est bien entendu que cette représentation est utilisée à des fins d'illustration et qu'en réalité la répartition est totalement aléatoire.

Un terminal identifié se voit allouer une ressource spectrale par la station de base pour l'établissement d'une communication relayée par cette station, un tel terminal est désigné par CU$_i$ et est dit servi. Toutefois, quand la station a alloué toutes ses ressources spectrales elle est à pleine charge et ne peut plus servir de terminal identifié qui demande l'établissement d'une communication. Lors de la demande d'établissement de la communication, la station de base a connaissance de l'identifiant du destinataire.

En comparant avec une liste de terminaux identifiés dans sa zone de couverture, la station de base peut déterminer si le destinataire appartient à cette liste. Ainsi, la station de base peut identifier des paires de terminaux D2D$_j$ susceptibles d'établir une communication en direct.

Sur le schéma de la figure 1, les flèches pleines représentent les voies montantes des terminaux CU$_i$ pour lesquels la station de base a alloué une ressource spectrale. Les flèches en traits discontinus représentent des communications en direct au sein d'une paire de terminaux D2D$_j$. Les flèches en pointillées représentent des liens d'interférence. C ={CU$_1$,CU$_2$,..., CU$_i$, CU$_N$} est l'ensemble des terminaux CU$_i$ identifiés par la station auxquels une ressource spectrale est allouée. D={D2D$_1$, D2D$_2$,...,D2D$_j$,...,D2D$_M$} est l'ensemble des paires de terminaux D2D$_j$ identifiées par la station.

Un procédé de communication selon l'invention permet alors à la station de base d'autoriser les communications en direct entre terminaux d'une paire D2D$_j$ bien que cette station de base ait atteint la pleine charge, sous réserve du respect de certaines contraintes. En particulier, l'autorisation est sous contrainte de respecter simultanément un critère de QoS pour le terminal servi et pour la paire autorisée à émettre en direct. Ce critère de QoS est bien entendu attaché à la communication via la station de base ou à la communication en directe ; il peut prendre des valeurs différentes entre le terminal servi et la paire.

Le procédé examine donc dans un premier temps l'admissibilité d'une paire D2D. Cette admissibilité est déterminée uniquement sous respect de la contrainte d'un critère de QoS pour chacune des communications du terminal servi et de la paire D2D. A l'issu de ce contrôle d'admissibilité, la paire est admissible ou pas. La paire est admissible si au moins un terminal servi permet de répondre au critère de QoS. Ce terminal est dit candidat, R$_j$ est l'ensemble des terminaux candidats pour la paire D2D$_j$.

Le critère de QoS peut correspondre à un niveau de SINR minimal. Il peut prendre d'autres formes par exemple un niveau de SINR minimal garanti à X% de probabilité (X peut être 99 par example).

Si l'ensemble R$_j$ de terminaux CU$_i$ servis candidats au partage de leurs ressources spectrales respectives en voie montante avec la paire de terminaux est vide, la paire de terminaux D2D$_j$ n'est pas admissible et donc non autorisée à établir une communication en direct puisqu'il n'y a aucun terminal candidat au partage de sa ressource spectrale.

Le procédé s'attache à autoriser un partage de la ressource spectrale sur la voie montante (uplink selon la terminologie anglosaxonne) des communications relayées car sur ce lien les interférences impactent uniquement la station de base.

L'affaiblissement lors de la propagation est supposé dominé par des bruits blancs gaussiens qui s'additionnent. $\sigma_N^2$ désigne alors la puissance du bruit blanc gaussien additif sur chaque canal.

La station de base connaît, par exemple en récupérant des données échangées dans un canal de signalisation pendant la phase d'identification ou ultérieurement lors d'une demande d'établissement d'une communication :

$g_j$, le gain de canal entre les terminaux d'une paire $D2D_j$,

$g_{i,B}$, le gain de canal entre le terminal $CU_i$ et la station de base,

$h_{j,B}$, le gain de canal du lien d'interférence de l'émetteur $D2D\_Tx_j$ de la paire $D2D_j$ à la station de base, canal qui intervient lorsqu'un terminal de la paire émet à destination de l'autre terminal de la paire alors que la station de base reçoit une émission du terminal $CU_i$,

$h_{i,j}$, le gain de canal du lien d'interférence d'un terminal $CU_i$ au récepteur $D2D\_Rx_j$ de la paire $D2D_j$, canal qui intervient lorsque le terminal $CU_i$ émet à destination de la station de base (donc sur la voie montante) alors qu'un terminal de la paire est en réception de l'émission de l'autre terminal de la paire.

$P_{max}$, la puissance d'émission maximale d'un terminal,

$\xi^d_{j,min}$ le niveau de SINR minimum requis par une paire $D2Dj$,

$\xi^c_{i,min}$ le niveau de SINR minimum requis par un terminal $CUi$.

La puissance d'émission du terminal CUi est noté $P^c_i$, la puissance d'émission de la paire D2D_j (sous entendu de l'émetteur de la paire) est notée $P^d_j$.

Un procédé selon l'invention est détaillé ci-après et illustré par l'organigramme représenté à la figure 2.

Le procédé 1 comprend un contrôle 2 d'admission d'une paire D2D_j de terminaux candidats à une communication en direct. Ce contrôle d'admission comprend :

- la détermination d'un ensemble R_j de terminaux CU_i servis candidats au partage de leurs ressources spectrales respectives avec la paire D2D_j de terminaux. Un terminal CU_i servi appartient à l'ensemble R_j si ce terminal et la paire respectent leurs critères de QoS respectifs.

Selon un mode de réalisation, le critère de QoS correspond à un niveau de SINR minimal. Selon un mode particulier, un terminal CU_i servi appartient à l'ensemble R_j si ce terminal et la paire D2D_j vérifient le système suivant d'équations :

$$\begin{cases} 0 \leq \dfrac{(g_j \xi^c_{i,\min} + h_{j,B} \xi^c_{i,\min} \xi^d_{j,\min})\sigma_N^2}{g_j g_{i,B} - \xi^c_{i,\min} \xi^d_{j,\min} h_{i,j} h_{j,B}} \leq P_{\max}, \\[4mm] 0 \leq \dfrac{(h_{i,j} \xi^c_{i,\min} \xi^d_{j,\min} + g_{i,B} \xi^d_{j,\min})\sigma_N^2}{g_j g_{i,B} - \xi^c_{i,\min} \xi^d_{j,\min} h_{i,j} h_{j,B}} \leq P_{\max}. \end{cases} \tag{9}$$

En effet, l'admission d'une paire D2D_j pour un partage de ressource avec un terminal de l'ensemble Rj avec respect des SINR respectifs tout en optimisant le débit global du réseau d'accès peut être formulée par le système suivant d'équations :

$$\max_{\rho_{i,j}, P^c_i, P^d_j} \left\{ \sum_{i \in C} \log_2(1 + \xi^c_i) + \sum_{j \in S} \log_2(1 + \xi^d_j) \right\} \tag{2a}$$

sous contraintes que :

$$\xi^c_i = \frac{P^c_i g_{i,B}}{\sigma_N^2 + \rho_{i,j} P^d_j h_{j,B}} \geq \xi^c_{i,\min}, \ \forall i \in C, \tag{2b}$$

$$\xi^d_j = \frac{P^d_j g_j}{\sigma_N^2 + \rho_{i,j} P^c_i h_{i,j}} \geq \xi^d_{j,\min}, \ \forall j \in S, \tag{2c}$$

$$\rho_{i,j} \in \{0,1\}, \ \sum_j \rho_{i,j} \leq 1, \ \forall i \in C, \tag{2d}$$

$$\rho_{i,j} \in \{0,1\}, \ \sum_i \rho_{i,j} \leq 1, \ \forall j \in S, \tag{2e}$$

$$P_i^c \leq P_{\max}, \forall i \in C, \tag{2f}$$

$$P_j^d \leq P_{\max}, \forall j \in S, \tag{2g}$$

dans lequel S (S ⊆ D) est l'ensemble des paires D2D$_j$ admissibles, $\rho_{i,j}$ est l'indicateur de réutilisation de ressource entre un terminal CU$_i$ et une paire D2D$_j$. : $\rho_{i,j}$ = 1 quand la paire D2D$j$ utilise la ressource du terminal CU$_i$, sinon $\rho_{i,j}$ = 0. La relation (2d) correspond à la contrainte que la ressource d'un terminal CU$_i$ est au maximum partagée une fois avec une paire de terminaux. Et la relation (2e) correspond à la qu'une paire de terminaux D2D$_j$ partage la ressource d'au maximum un terminal CU$_i$.

Une paire de terminaux D2D$_j$ est admissible ($j \in S$) à partager la ressource d'un terminal CU$_i$ seulement si leurs exigences respectives de QoS exprimées en niveaux de SINR sont respectées. Ces contraintes sont vérifiées si :

$$\xi_i^c = \frac{P_i^c g_{i,B}}{\sigma_N^2 + P_j^d h_{j,B}} \geq \xi_{i,\min}^c, \tag{3a}$$

$$\xi_j^d = \frac{P_j^d g_j}{\sigma_N^2 + P_i^c h_{i,j}} \geq \xi_{j,\min}^d \tag{3b}$$

$$P_i^c \leq P_{\max}, \quad P_j^d \leq P_{\max}, \tag{3c}$$

Le SINR d'un terminal CU$_i$ qui ne partage pas sa ressource spectrale avec une paire D2D$_j$ est respecté si ce terminal émet avec une puissance minimum donnée par :

$$P_{i,\min}^c = \frac{\xi_{i,\min}^c \sigma_N^2}{g_{i,B}} \tag{4}$$

Le SINR d'une paire D2D$_j$ est respecté en l'absence d'interférence en émettant à une puissance minimum donnée par :

$$P_{j,\min}^d = \frac{\xi_{j,\min}^d \sigma_N^2}{g_j}. \tag{5}$$

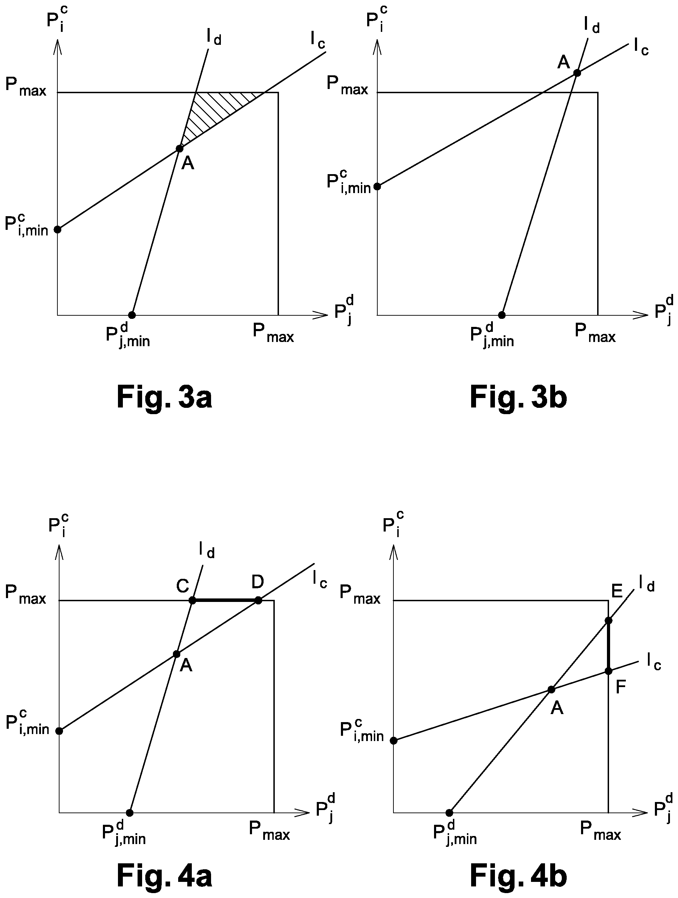

Les figures 3a et 3b représentent schématiquement les contraintes imposées par les équations (3a), (3b), (3c), (4) et (5). Les droites $I_c$ et $I_d$ correspondent aux équations (3a) et (3b) lorsque $\xi_i^c = \xi_{i,\min}^c$ et $\xi_j^d = \xi_{j,\min}^d$. L'existence de terminaux CU$_i$ dans l'ensemble R$_j$ est schématisé par l'existence d'une zone grisée, appelée zone admissible, telle que les couples de puissance ($P_i^c, P_j^d$) de cette zone respectent simultanément les équations (3a), (3b) et (3c). La figure 3a correspond au cas où cette zone admissible n'est pas vide et la figure 3b correspond au cas où cette zone est vide car il n'y a pas de couple de puissances qui permette de respecter simultanément les contraintes formulées par les équations (3a), (3b) et (3c), (4) et (5).

Pour que la zone admissible ne soit pas vide il faut et il suffit que le point A d'intersection des droites $I_c$ et $I_d$ soit dans le carré $P_{max}$-$P_{max}$. Ceci nécessite que la pente de la droite $I_d$ soit supérieure à la pente de la droite $I_c$ :

$$\frac{\xi_{i,\min}^c h_{j,B}}{g_{i,B}} < \frac{g_j}{\xi_{j,\min}^d h_{i,j}} \tag{6}$$

Les coordonnées du point A permettent de déterminer les puissances minimales d'émission du terminal $CU_i$ et de la paire $D2D_j$ pour respecter les contraintes respectives de SINR minimum.

$$\begin{cases} \dfrac{P_{i,A}^c g_{i,B}}{\sigma_N^2 + P_{j,A}^d h_{j,B}} = \xi_{i,\min}^c, \\[4mm] \dfrac{P_{j,A}^d g_j}{\sigma_N^2 + P_{i,A}^c h_{i,j}} = \xi_{j,\min}^d. \end{cases} \qquad (7)$$

Ce qui conduit à :

$$\begin{cases} P_{i,A}^c = \dfrac{(g_j \xi_{i,\min}^c + h_{j,B} \xi_{i,\min}^c \xi_{j,\min}^d)\sigma_N^2}{g_j g_{i,B} - \xi_{i,\min}^c \xi_{j,\min}^d h_{i,j} h_{j,B}}, \\[4mm] P_{j,A}^d = \dfrac{(h_{i,j} \xi_{i,\min}^c \xi_{j,\min}^d + g_{i,B} \xi_{j,\min}^d)\sigma_N^2}{g_j g_{i,B} - \xi_{i,\min}^c \xi_{j,\min}^d h_{i,j} h_{j,B}}, \end{cases} \qquad (8)$$

Pour que l'ensemble Rj ne soit pas vide, c'est-à-dire pour que la paire $D2D_j$ soit admissible il faut donc qu'au moins un couple ($P_{i,A}^c$, $P_{j,A}^d$) soit compris entre (0,0) et ($P_{\max}$, $P_{\max}$), avec $P_{i,A}^c$ la puissance d'un des terminaux $CU_i$ candidats potentiels, ce qui correspond au système d'équations (9).

Dans le cas où l'ensemble S contient plusieurs paires, le procédé contrôle l'admission de chaque paire comme expliqué ci-dessus.

Selon un mode particulier de réalisation, le gain de canal entre un terminal identifié et la station de base peut s'exprimer sous la forme : $g_{i,B} = K \cdot L_{i,B}^{-\alpha}$ (1) (1) avec $K$ une constante déterminée par des paramètres du réseau d'accès, $\alpha$ l'affaiblissement de propagation et $L_{i,B}$ la distance entre le terminal identifié $CU_i$ et la station de base. Cette distance peut être connue par différentes méthodes connues par exemple en exploitant des coordonnées GPS des terminaux. Un terminal $CU_i$ servi appartient à l'ensemble $R_j$ si sa distance $L_{i,jRx}$ au récepteur de la paire $D2D_j$ est supérieure ou égale à la distance minimale :

$$L_{i,jRx}^{\min} = \begin{cases} [\dfrac{K \xi_{i,\min}^c \xi_{j,\min}^d P_{\max}}{(P_{\max} g_{i,B} - \xi_{i,\min}^c \sigma_N^2)\beta - \xi_{i,\min}^c \xi_{j,\min}^d \sigma_N^2}]^{\frac{1}{\alpha}} & \text{si} \quad \dfrac{P_{\max} g_{i,B}}{\sigma_N^2 + P_{\max} h_{j,B}} \le \xi_{i,\min}^c, \\[6mm] [\dfrac{K \xi_{i,\min}^c \xi_{j,\min}^d (\sigma_N^2 + P_{\max} h_{j,B})}{g_{i,B}(P_{\max} g_j - \xi_{j,\min}^d \sigma_N^2)}]^{\frac{1}{\alpha}} & \text{si} \quad \dfrac{P_{\max} g_{i,B}}{\sigma_N^2 + P_{\max} h_{j,B}} > \xi_{i,\min}^c, \end{cases} \qquad (10)\,o$$

ù $\beta = \dfrac{g_j}{h_{j,B}}$ représente le facteur de gain entre le gain de canal de la paire $D2D_j$ et le gain de canal du lien d'interférence de l'émetteur de la paire $D2D_j$ à la station de base. Selon la démonstration de l'annexe A, les contraintes imposées par l'équation (9) peuvent s'écrire sous la forme (10) en tenant compte de l'expression (1). Tous les gains de canal contenus dans les équations (9) et (10) peuvent aussi être obtenus par l'expression (1) dès que les distances associés respectives sont connues ce qui a pour avantage de ne pas nécessiter d'opération pour mesurer ces gains.

Le déroulement suivant du procédé est plus particulièrement adapté lorsque les ensembles $R_j$ déterminés précédemment sont disjoints.

Ainsi, pour une paire de terminaux donnée, le procédé détermine 4 des couples de puissances d'émission associés aux terminaux de l'ensemble $R_j$ et à la paire admissible maximisant un critère de débit. La maximisation du débit global du réseau d'accès, c'est-à-dire des communications via la station de base et des communications en direct, s'exprime par la formule (2a). Compte tenu que les ensembles Rj sont disjoints, la maximisation du débit global revient à une maximisation pour chaque paire $D2D_j$ de la somme des débits respectivement du terminal candidat $CU_i$ considéré et de la paire de terminaux $D2D_j$.

Selon un mode de réalisation, les couples de puissance qui permettent cette maximisation vérifient l'équation suivante :

$$(P_i^{c*}, P_j^{d*}) = \arg \max_{P_i^c, P_j^d} \{ \log_2(1 + \xi_i^c) + \log_2(1 + \xi_j^d) \}, \tag{11}$$

sous contraintes des équations (3a)-(3c).

En reprenant la figure 3a, il est possible de distinguer trois situations différentes pour la zone d'admissibilité illustrées respectivement par les figures 4a-4c. Compte tenu que tous les couples de puissance appartenant à la zone d'admissibilité respectent les contraintes (3a)-(3c), les couples optimaux de puissance, c'est-à-dire qui conduisent à un débit global maximum appartiennent aux lignes marquées en trait gras sur les figures 4a-4c selon la démonstration faite en Annexe B. Les couples appartenant à ces lignes vérifient une des équations du système suivant qui correspondent respectivement aux trois situations :

$$(P_i^{c*}, P_j^{d*}) = \begin{cases} \arg \max_{(P_i^c, P_j^d) \in P_1} f(P_i^c, P_j^d) & \text{si} & \dfrac{P_{\max} g_{i,B}}{\sigma_N^2 + P_{\max} h_{j,B}} \leq \xi_{i,\min}^c \\[3ex] \arg \max_{(P_i^c, P_j^d) \in P_2} f(P_i^c, P_j^d) & \text{si} & \dfrac{P_{\max} g_{i,B}}{\sigma_N^2 + P_{\max} h_{j,B}} > \xi_{i,\min}^c \ \text{et} \ \dfrac{P_{\max} g_j}{\sigma_N^2 + P_{\max} h_{i,j}} > \xi_{j,\min}^d \\[3ex] \arg \max_{(P_i^c, P_j^d) \in P_3} f(P_i^c, P_j^d) & \text{si} & \dfrac{P_{\max} g_{i,B}}{\sigma_N^2 + P_{\max} h_{j,B}} > \xi_{i,\min}^c \ \text{et} \ \dfrac{P_{\max} g_j}{\sigma_N^2 + P_{\max} h_{i,j}} \geq \xi_{j,\min}^d \end{cases} \tag{12}$$

avec :

$$P_1 = \{(P_{\max}, P_1), (P_{\max}, P_2)\}$$

$$P_2 = \{(P_3, P_{\max}), (P_4, P_{\max})\}$$

$$P_3 = \{(P_{\max}, P_1), (P_{\max}, P_{\max}), (P_4, P_{\max})\}$$

$$P_1 = \frac{(\sigma_N^2 + P_{\max} h_{i,j}) \xi_{j,\min}^d}{g_j}$$

$$P_2 = \frac{P_{\max} g_{i,B} - \xi_{i,\min}^c \sigma_N^2}{\xi_{i,\min}^c h_{j,B}}$$

$$P_3 = \frac{P_{\max} g_j - \xi_{j,\min}^d \sigma_N^2}{\xi_{j,\min}^d h_{i,j}}$$

$$P_4 = \frac{(\sigma_N^2 + P_{\max} h_{j,B}) \xi_{i,\min}^c}{g_{i,B}}$$

Selon un mode de réalisation, pour départager les différents terminaux candidats au partage de ressource et déterminer le terminal CU$_i$ optimal qui va partager sa ressource, le procédé considère un critère de débit local.

Le débit maximum pour un terminal CU$_i$ candidat ($i \in R_j$) en l'absence de partage de sa ressource est :

$$T_{i,\max} = \log_2 (1 + \frac{P_{\max} g_{i,B}}{\sigma_N^2}) \tag{13}$$

Quand il partage sa ressource avec une paire D2D$j$, le débit somme maximal, $T_{i,j}^{sum}$, peut être exprimé sous la forme suivante :

$$T_{i,j}^{sum} = \log_2 (1 + \frac{P_i^{c^*} g_{i,B}}{P_j^{d^*} h_{j,B} + \sigma_N^2}) + \log_2 (1 + \frac{P_j^{d^*} g_j}{P_i^{c^*} h_{i,j} + \sigma_N^2}), \tag{14}$$

avec $(P_i^{c^*}, P_j^{d^*})$ donné par le système d'équations (12). Ainsi, le gain de débit avec une paire D2D$_j$ peut être exprimé sous la forme :

$$T_{i,j}^G = T_{i,j}^{sum} - T_{i,\max}. \tag{15}$$

Par conséquent, le terminal candidat optimal au partage de sa ressource avec la paire D2D $j$, est celui qui correspond à :

$$i^* = \arg \max_{i \in R_j} T_{i,j}^G. \tag{16}$$

c'est-à-dire celui qui conduit à une augmentation maximale de débit local.

Le déroulement suivant du procédé est plus particulièrement adapté pour des ensembles R$_j$ non disjoints. Dans ce cas, la recherche du débit local maximal ne peut pas s'effectuer séparément entre les paires D2D$_j$ admissibles dont les ensembles R$_j$ ne sont pas disjoints. La recherche des terminaux candidats optimaux revient à résoudre le système suivant :

$$\max_{i \in C', j \in S} \rho_{i,j} T_{i,j}^G,$$

sous contraintes :

$$\sum_j \rho_{i,j} \leq 1, \ \rho_{i,j} \in \{0,1\}, \forall i \in C', \tag{17}$$

$$\sum_i \rho_{i,j} \leq 1, \ \rho_{i,j} \in \{0,1\}, \forall j \in S,$$

où C est l'union de tous les terminaux candidats de toutes les paires D2D$_j$ ou des paires D2D$_j$ dont les ensembles R$_j$ ne sont pas disjoints.

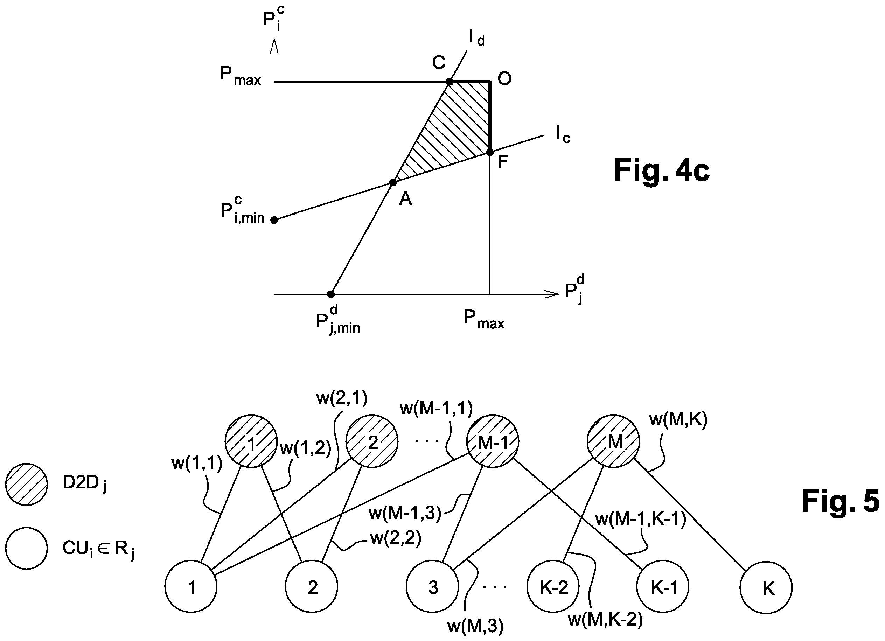

Le procédé utilise un algorithme d'optimisation de poids tel que celui décrit dans [3] pour résoudre le système d'équations (17). Un tel algorithme est basé sur un graphe de bipartisme tel qu'illustré par la figure 5. La ligne supérieure représente les différentes paires D2Dj. La ligne inférieure représente les terminaux candidats. L'ensemble des paires et l'ensemble des terminaux candidats sont assimilés à des groupes de crête pour le graphe de bipartisme. La crête i est reliée par un lien ij à la crête j quand le terminal j appartient à l'ensemble Rj de la paire D2Dj. Le gain de débit local, $T_{i,j}^G$, est considéré comme le poids du lien ij.

La description qui précède considère dans un souci de simplification que la puissance d'émission maximale, $P_{MAX}$, est identique pour tous les émetteurs des terminaux. Il est aisé pour l'homme du métier d'adapter les différentes équations de manière à prendre en compte une puissance d'émission maximale par émetteur k : $P_{k,MAX}$ pour prendre en compte par exemple un état de charge différent entre les batteries des émetteurs k.

En considérant que la valeur de rapport signal à interférence plus bruit minimum prise en compte dans les précédentes équations n'est pas la vraie valeur de SINR minimum mais une valeur pondérée de la vraie valeur de SINR minimum par le rapport $a_k = P_{MAX} / P_{k,MAX}$ (ainsi, les vraies valeurs s'expriment sous la forme : $\dfrac{\xi^c_{i,min}}{a_i}$, $\dfrac{\xi^d_{j,min}}{a_j}$ ) alors les équations sont inchangées et la pondération doit être prise en compte uniquement lors de l'émission de l'émetteur k. La puissance déterminée par le système d'équations (12) doit être divisée par ce coefficient de pondération $a_k$ pour obtenir la puissance à laquelle l'émetteur k doit émettre.

Bien que les modes de réalisation soient détaillés précédemment à partir d'exemples basés sur un réseau cellulaire, l'invention peut tout aussi bien s'utiliser dans un contexte de réseau sans fil, par exemple de type WiFi. Dans ce cas, la station de base est plus connue sous les termes de point d'accès.

Références :

[1] K. Doppler, M. Rinne, C. Wijting, C. Ribeiro, and K. Hugl, "Device-to-device communication as an underlay to lte-advanced networks," IEEE Commun. Mag., vol. 47, no. 12, pp. 42-49, 2009.

[2] M. Zulhasnine, C. Huang, and A. Srinivasan, "Efficient resource allocation for device-to-device communication underlaying lte network," in Proc. IEEE 6th Int. Conf. on Wireless and Mobile Computing, Networking and Commun. (WiMob' 2010), 2010, pp. 368-375.

[3] D. West et al., Introduction to graph theory. Upper Saddle River, NJ: Prentice Hall, 2001.

[4] A. Gjendemsjo, D. Gesbert, G. Oien, and S. Kiani, "Optimal power allocation and scheduling for two-cell capacity maximization," in Proc. IEEE 4th Int. Symp. on Modeling and Optimization in Mobile, Ad Hoc and Wireless Networks, 2006, pp. 1-6.

Annexe A

Si la paire D2D*j* est admissible à partager la ressource avec le terminal CU*i*, la contrainte (9) doit être satisfaite. Les deux inégalités de (9) permettent d'écrire :

$$h_{i,j} \leq \begin{cases} \dfrac{P_{max} g_{i,B} g_j - \sigma_N^2 (\xi^c_{i,min} g_j - \xi^c_{i,min} \xi^d_{j,min} h_{j,B})}{\xi^c_{i,min} \xi^d_{j,min} P_{max} h_{j,B}} \equiv h^c_{i,j}, \\[4mm] \dfrac{P_{max} g_{i,B} g_j - \xi^d_{j,min} g_{i,B} \sigma_N^2}{\xi^c_{i,min} \xi^d_{j,min} (\sigma_N^2 + P_{max} h_{j,B})} \equiv h^d_{i,j}, \end{cases} \qquad (A.1)$$

Donc :

$$h_{i,j} \leq \min\{h^c_{i,j}, h^d_{i,j}\} \qquad (A.2)$$

En comparant $h^c_{i,j}$ et $h^d_{i,j}$ on obtient :

$$h_{i,j} \leq \begin{cases} h_{i,j}^{c}, & \text{si} \quad \dfrac{P_{\max} g_{i,B}}{\sigma_N^{\,2} + P_{\max} h_{j,B}} \leq \xi_{i,\min}^{c}, \\[3mm] h_{i,j}^{d}, & \text{si} \quad \dfrac{P_{\max} g_{i,B}}{\sigma_N^{\,2} + P_{\max} h_{j,B}} > \xi_{i,\min}^{c}. \end{cases} \qquad (A.3)$$

En substituant le modèle de canal correspondant à l'équation (1) dans (A.3), on obtient :

$$L_{i,jRx} \geq \begin{cases} \left[\dfrac{K\xi_{i,\min}^{c}\xi_{j,\min}^{d} P_{\max}}{(P_{\max} g_{i,B} - \xi_{i,\min}^{c}\sigma_N^{\,2})\beta - \xi_{i,\min}^{c}\xi_{j,\min}^{d}\sigma_N^{\,2}}\right]^{\frac{1}{\alpha}} & \text{si} \quad \dfrac{P_{\max} g_{i,B}}{\sigma_N^{\,2} + P_{\max} h_{j,B}} \leq \xi_{i,\min}^{c}, \\[5mm] \left[\dfrac{K\xi_{i,\min}^{c}\xi_{j,\min}^{d}(\sigma_N^{\,2} + P_{\max} h_{j,B})}{g_{i,B}(P_{\max} g_j - \xi_{j,\min}^{d}\sigma_N^{\,2})}\right]^{\frac{1}{\alpha}} & \text{si} \quad \dfrac{P_{\max} g_{i,B}}{\sigma_N^{\,2} + P_{\max} h_{j,B}} > \xi_{i,\min}^{c}, \end{cases} \qquad (A.4)$$

Annexe B

Selon [4], pour une paire de puissance $(P_i^c, P_j^d)$ considérée dans l'intérieur de la zone admissible, il existe toujours une autre paire de puissances $(\lambda P_i^c, \lambda P_j^d)$ ($\lambda > 1$) dans la zone admissible telle que

$$f(\lambda P_i^c, \lambda P_j^d) > f(P_i^c, P_j^d), \qquad (B.1)$$

où $f(P_i^c, P_j^d) = \log_2\left(1 + \dfrac{P_i^c g_{i,B}}{\sigma_N^{\,2} + P_j^d h_{j,B}}\right) + \log_2\left(1 + \dfrac{P_j^d g_j}{\sigma_N^{\,2} + P_i^c h_{i,j}}\right)$. Ceci implique qu'au moins une puissance de la paire de puissances optimales $(P_i^{c*}, P_j^{d*})$ est limitée par la contrainte de maximum de puissance, $P_{\max}$.

1$^{\text{ER}}$ scénario :

$\dfrac{P_{\max} g_{i,B}}{\sigma_N^{\,2} + P_{\max} h_{j,B}} \leq \xi_{i,\min}^{c}$ , la zone admissible est illustrée par la figure 4a. Selon (B.1), la paire de puissances optimales est localisée sur la ligne CD. Ceci signifie que la puissance optimale pour le terminal CU*i*, $P_i^{c*}$ est toujours $P_{\max}$ et la puissance optimale pour la paire D2D*j* satisfait :

$$\dfrac{(\sigma_N^{\,2} + P_{\max} h_{i,j})\xi_{j,\min}^{d}}{g_j} \leq P_j^d \leq \dfrac{P_{\max} g_{i,B} - \xi_{i,\min}^{c}\sigma_N^{\,2}}{\xi_{i,\min}^{c} h_{j,B}}. \qquad (B.2)$$

Dans [4], il est aussi prouvé que $f(P_i^c, P_j^d)$ est une fonction convexe sur une variable $P_i^c$ ou $P_j^d$ quand l'autre variable $P_j^d$ ou $P_i^c$ est fixée à un niveau $P_{\max}$. Ceci implique que la paire de puissances optimales sur la ligne CD est localisée dans le point d'extrémité C ou D. Ainsi, l'allocation de puissance optimale pour ce scénario peut être exprimée par :

$$(P_i^{c*}, P_j^{d*}) = \arg \max_{(P_i^c, P_j^d) \in \mathrm{P}_1} f(P_i^c, P_j^d), \qquad (B.3)$$

$$\text{où } \; \mathrm{P}_{\overline{1}}\{(P_{\max}, \; \frac{(\sigma_N^{\;2} + P_{\max} h_{i,j})\xi_{j,\min}^d}{g_j}), \; (P_{\max}, \; \frac{P_{\max} g_{i,B} \text{-} \xi_{i,\min}^c \sigma_N^{\;2}}{\xi_{i,\min}^c h_{j,B}})\}.$$

2$^e$ scénario :

$\dfrac{P_{\max} g_{i,B}}{\sigma_N^{\;2} + P_{\max} h_{j,B}} > \xi_{i,\min}^c$ et $\dfrac{P_{\max} g_j}{\sigma_N^{\;2} + P_{\max} h_{i,j}} < \xi_{j,\min}^d$ , la zone admissible est illustrée par la figure 4b. Selon (B.1), la paire de puissances optimales est localisée sur la ligne EF donc $P_j^d = P_{\max}$ . Comme par ailleurs $f(P_i^c, P_{\max})$ est une fonction convexe de $P_i^c$ alors la paire des puissances optimales est localisée dans le point d'extrémité E ou F. Par conséquent, l'allocation de puissance optimale pour ce scénario peut être exprimée par :

$$(P_i^{c*}, P_j^{d*}) = \arg \max_{(P_i^c, P_j^d)\in \mathrm{P}_2} f(P_i^c, P_j^d), \tag{B.4}$$

$$\text{où } \; \mathrm{P}_{\overline{2}}\{(\frac{P_{\max} g_j \text{-} \xi_{j,\min}^d \sigma_N^{\;2}}{\xi_{j,\min}^d h_{i,j}}, \; P_{\max}), \; (\frac{(\sigma_N^{\;2} + P_{\max} h_{j,B})\xi_{i,\min}^c}{g_{i,B}}, \; P_{\max})\}.$$

3$^e$ scénario :

$\dfrac{P_{\max} g_{i,B}}{\sigma_N^{\;2} + P_{\max} h_{j,B}} > \xi_{i,\min}^c$ et $\dfrac{P_{\max} g_j}{\sigma_N^{\;2} + P_{\max} h_{i,j}} \geq \xi_{j,\min}^d$ , la zone admissible est illustrée par la figure 4c. Selon (B.1), la paire de puissances optimales est localisée sur la ligne CO ou OF. Quand la paire est localisée sur la ligne CO, avec une démonstration similaire à celle du 1$^{er}$ scénario il vient que la paire de puissances optimales est localisée au point C ou O. Quand la paire est localisée sur la ligne OF, avec une démonstration similaire à celle du 2$^e$ scénario, il vient que la paire de puissances optimales est localisée au point O ou F. Par conséquent, l'allocation de puissance optimale pour ce scénario peut être exprimée par :

$$(P_i^{c*}, P_j^{d*}) = \arg \max_{(P_i^c, P_j^d)\in \mathrm{P}_3} f(P_i^c, P_j^d), \tag{B.5}$$

$$\text{où } \; \mathrm{P}_{\overline{3}}\{(P_{\max}, \frac{(\sigma_N^{\;2} + P_{\max} h_{i,j})\xi_{j,\min}^d}{g_j}), \; (P_{\max}, \; P_{\max}), \; (\frac{(\sigma_N^{\;2} + P_{\max} h_{j,B})\xi_{i,\min}^c}{g_{i,B}}, \; P_{\max})\}.$$

## Revendications

1. Procédé (1) de communication mis en oeuvre par une station de base, SB, d'un réseau d'accès pour allouer des ressources spectrales entre des terminaux (CU, D2D) identifiés par la station, la station ayant alloué toutes ses ressources spectrales à des terminaux CU$_i$ identifiés ayant une communication établie via la station de base, ces terminaux sont dits servis, comprenant pour toute paire D2D$_j$ de terminaux candidats à une communication en direct :

   - un contrôle d'admission de la paire D2D$_j$ comprenant la détermination d'un ensemble R$_j$ de terminaux CU$_i$ servis candidats au partage de leurs ressources spectrales respectives avec la paire D2D$_j$ sous la seule contrainte du respect par le terminal CU$_i$ candidat et par la paire D2D$_j$ de leurs critères respectifs de QoS,

   **caractérisé en ce qu'**un terminal CU$_i$ appartient à l'ensemble R$_j$ s'il vérifie le système suivant d'équations calculé à la station de base:

$$\begin{cases} 0 \leq \dfrac{(g_j \xi^c_{i,\min} + h_{j,B}\xi^c_{i,\min}\xi^d_{j,\min})\sigma_N^2}{g_j g_{i,B} - \xi^c_{i,\min}\xi^d_{j,\min}h_{i,j}h_{j,B}} \leq P_{\max} \\[4mm] 0 \leq \dfrac{(h_{i,j}\xi^c_{i,\min}\xi^d_{j,\min} + g_{i,B}\xi^d_{j,\min})\sigma_N^2}{g_j g_{i,B} - \xi^c_{i,\min}\xi^d_{j,\min}h_{i,j}h_{j,B}} \leq P_{\max} \end{cases}$$

avec :

$g_j$, le gain de canal entre les terminaux de la paire D2D$_j$,

$g_{i,B}$, le gain de canal entre le terminal CU$_i$ et la station de base sur la voie montante,

$h_{j,B}$, le gain de canal du lien d'interférence de l'émetteur de la paire D2D$_j$ à la station de base,

$h_{i,j}$, le gain de canal du lien d'interférence d'un terminal CU$_i$ au récepteur de la paire D2D$_j$,

$\sigma_N$, la puissance du bruit blanc gaussien additif sur chaque canal,

$P_{\max}$, la puissance d'émission maximale d'un terminal,

$\xi^d_{j,\min}$ le niveau de SINR minimum requis par la paire D2D$_j$,

$\xi^c_{i,\min}$ le niveau de SINR minimum requis par un terminal CU$_i$

2. Procédé (1) de communication selon la revendication 1 comprenant en outre, pour une paire D2D$_j$ admissible et par terminal CU$_i$ de l'ensemble R$_j$ de cette paire, une détermination d'un couple de puissances d'émission associées respectivement au terminal CU$_i$ et à la paire D2D$_j$ tel que le couple maximise la somme des débits du terminal CU$_i$ et de la paire D2D$_j$.

3. Procédé (1) de communication selon la revendication 2, dans lequel le couple de puissances d'émission associées au terminal CU$_i$ et à la paire D2D$_j$ est donné par le système suivant d'équations :

$$(P_i^{c*}, P_j^{d*}) = \begin{cases} \arg\max\limits_{(P_i^c, P_j^d)\in \mathcal{P}_1} f(P_i^c, P_j^d) & \text{si} & \dfrac{P_{\max}g_{i,B}}{\sigma_N^2 + P_{\max}h_{j,B}} \leq \xi^c_{i,\min} \ \text{ou} \\[4mm] \arg\max\limits_{(P_i^c, P_j^d)\in \mathcal{P}_2} f(P_i^c, P_j^d) & \text{si} & \dfrac{P_{\max}g_{i,B}}{\sigma_N^2 + P_{\max}h_{j,B}} > \xi^c_{i,\min} \ \text{et} \ \dfrac{P_{\max}g_j}{\sigma_N^2 + P_{\max}h_{i,j}} > \xi^d_{j,\min} \ ou \\[4mm] \arg\max\limits_{(P_i^c, P_j^d)\in \mathcal{P}_3} f(P_i^c, P_j^d) & \text{si} & \dfrac{P_{\max}g_{i,B}}{\sigma_N^2 + P_{\max}h_{j,B}} > \xi^c_{i,\min} \ \text{et} \ \dfrac{P_{\max}g_j}{\sigma_N^2 + P_{\max}h_{i,j}} \geq \xi^d_{j,\min} \end{cases}$$

avec :

$$\mathcal{P}_1 = \{(P_{\max}, P_1), (P_{\max}, P_2)\},$$

$$\mathcal{P}_2 = \{(P_3, P_{\max}), (P_4, P_{\max})\},$$

$$\mathcal{P}_3 = \{(P_{\max}, P_1), (P_{\max}, P_{\max}), (P_4, P_{\max})\},$$

$$P_1 = \frac{(\sigma_N^2 + P_{\max}h_{i,j})\xi^d_{j,\min}}{g_j},$$

$$P_2 = \frac{P_{max}\, g_{i,B} - \xi^c_{i,min}\, \sigma_N^{\ 2}}{\xi^c_{i,min}\, h_{j,B}},$$

$$P_3 = \frac{P_{max}\, g_j - \xi^d_{j,min}\, \sigma_N^{\ 2}}{\xi^d_{j,min}\, h_{i,j}},$$

$$P_4 = \frac{(\sigma_N^{\ 2} + P_{max}\, h_{j,B})\, \xi^c_{i,min}}{g_{i,B}},$$

$$f(P_i^c, P_j^d) \equiv \log_2(1 + \xi_i^c) + \log_2(1 + \xi_j^d)$$

la fonction somme des débits respectivement d'un terminal candidat Cui et de la paire de terminaux D2Dj.

4. Procédé (1) de communication selon l'une des revendications 1 à 3 dans lequel le contrôle d'admission est répété pour plusieurs paires D2Dj de terminaux candidats à une communication en direct.

5. Procédé (1) de communication selon l'une des revendications 1 à 4 comprenant en outre une détermination d'un terminal optimal parmi plusieurs terminaux CU$_i$ d'un ensemble R$_j$, le terminal optimal étant celui qui respecte un critère de gain de débit local, le gain de débit local pour un terminal de l'ensemble R$_j$ étant déterminé par la différence entre d'une part la somme des débits obtenus respectivement par ce terminal et la paire D2D$_j$ lorsque ce terminal partage sa ressource avec cette paire et d'autre part le débit obtenu par ce terminal lorsque ce terminal ne partage pas sa ressource avec cette paire D2D$_j$.

6. Procédé (1) de communication selon la revendication 5 combinée à la revendication 4 dans lequel la détermination d'un terminal optimal est effectuée pour tous les ensembles disjoints.

7. Procédé (1) de communication selon l'une des revendications 4 à 6 comprenant en outre une détermination conjointe, pour des ensembles non disjoints, de terminaux optimaux qui permettent d'atteindre une augmentation maximale de débit local au moyen d'un algorithme d'optimisation de poids.

8. Station de base, SB, adaptée pour mettre en oeuvre un procédé de communication selon l'une des revendications 1 à 7 comprenant :

   - un moyen pour contrôler l'admission de la paire D2D$_j$ comprenant la détermination d'un ensemble R$_j$ de terminaux CU$_i$ servis candidats au partage de leurs ressources spectrales respectives avec la paire D2D$_j$ sous la seule contrainte du respect par le terminal CU$_i$ candidat et par la paire D2D$_j$ de leurs critères respectifs de QoS, **caractérisée par**
   - un moyen pour calculer et déterminer si un terminal CU$_i$ appartient à l'ensemble R$_j$ s'il vérifie le système suivant d'équations :

$$\begin{cases} 0 \leq \dfrac{(g_j\, \xi^c_{i,min} + h_{j,B}\, \xi^c_{i,min}\, \xi^d_{j,min})\, \sigma_N^{\ 2}}{g_j\, g_{i,B} - \xi^c_{i,min}\, \xi^d_{j,min}\, h_{i,j}\, h_{j,B}} \leq P_{max} \\[4mm] 0 \leq \dfrac{(h_{i,j}\, \xi^c_{i,min}\, \xi^d_{j,min} + g_{i,B}\, \xi^d_{j,min})\, \sigma_N^{\ 2}}{g_j\, g_{i,B} - \xi^c_{i,min}\, \xi^d_{j,min}\, h_{i,j}\, h_{j,B}} \leq P_{max} \end{cases}$$

avec :

g$_j$, le gain de canal entre les terminaux de la paire D2D$_j$,

g$_{i,B}$, le gain de canal entre le terminal CU$_i$ et la station de base sur la voie montante,

h$_{j,B}$, le gain de canal du lien d'interférence de l'émetteur de la paire D2D$_j$ à la station de base,

h$_{i,j}$, le gain de canal du lien d'interférence d'un terminal CU$_i$ au récepteur de la paire D2D$_j$,

$\sigma_N$, la puissance du bruit blanc gaussien additif sur chaque canal,

P$_{max}$, la puissance d'émission maximale d'un terminal,

$\xi^d_{j,min}$ le niveau de SINR minimum requis par la paire D2D$_j$,

$\xi^c_{i,min}$ le niveau de SINR minimum requis par un terminal CU$_i$.

9. Réseau d'accès comprenant au moins une station de base selon la revendication 8.

10. Support d'informations comportant des instructions de programme adaptées à la mise en oeuvre d'un procédé de communication selon l'une quelconque des revendications 1 à 7 lorsque ledit programme est chargé et exécuté dans une station de base destinée à mettre en oeuvre le procédé de communication.

**Patentansprüche**

1. Kommunikationsverfahren (1), das durch eine Basisstation, SB, eines Zugriffsnetzes ausgeführt wird, um spektrale Betriebsmittel zwischen Endgeräten (CU, D2D), die durch die Station identifiziert werden, aufzuteilen, wobei die Station alle ihre spektralen Betriebsmittel an identifizierte Endgeräte CU$_i$ aufgeteilt hat, die eine über die Basisstation aufgebaute Kommunikation besitzen, wobei diese Endgeräte bedient genannt werden, und das für jedes Paar D2D$_j$ von Kandidatenendgeräten mit D2D-Kommunikation Folgendes umfasst:

- Kontrollieren der Zulassung des Paars D2D$_j$, das das Bestimmen einer Gesamtheit R$_j$ von bedienten Endgeräten CU$_i$, die Kandidaten für die gemeinsame Nutzung ihrer jeweiligen Spektrallinienbetriebsmittel sind, wobei das Paar D2D$_j$ unter der einzigen Bedingung der Berücksichtigung ihrer jeweiligen QoS-Kriterien durch das Kandidatenendgerät CU$_i$ und durch das Paar D2D$_j$ steht,

**dadurch gekennzeichnet, dass** ein Endgerät CU$_i$ zu der Gesamtheit R$_j$ gehört, wenn es das folgende Gleichungssystem erfüllt, das bei der Basisstation berechnet wird:

$$\begin{cases} 0 \leq \dfrac{(g_j \xi^c_{i,min} + h_{j,B}\xi^c_{i,min}\xi^d_{j,min})\sigma_N^2}{g_j g_{i,B} - \xi^c_{i,min}\xi^d_{j,min}h_{i,j}h_{j,B}} \leq P_{max} \\[2em] 0 \leq \dfrac{(h_{i,j}\xi^c_{i,min}\xi^d_{j,min} + g_{i,B}\xi^d_{j,min})\sigma_N^2}{g_j g_{i,B} - \xi^c_{i,min}\xi^d_{j,min}h_{i,j}h_{j,B}} \leq P_{max} \end{cases}$$

mit:

$g_j$ Kanalverstärkung zwischen den Endgeräten des Paars D2D$_j$,

$g_{i,B}$ Kanalverstärkung zwischen dem Endgerät CU$_i$ und der Basisstation auf der Aufwärtsstrecke,

$h_{j,B}$ Kanalverstärkung der Störungsverbindung bei der Basisstation wegen des Senders des Paars D2D$_j$,

$h_{i,j}$ Kanalverstärkung der Störungsverbindung bei dem Empfänger des Paars D2D$_j$ wegen eines Endgeräts CU$_i$,

$\sigma_N$ Leistung des additiven Gaußschen weißen Rauschens auf jedem Kanal,

$P_{max}$ maximale Sendeleistung eines Endgeräts,

$\xi^d_{j,min}$ minimaler Pegel des SINR, das von dem Paar D2D$_j$ gefordert wird,

$\xi^c_{i,min}$ minimaler Pegel des SINR, das von einem Endgerät CU$_i$ gefordert wird.

2. Kommunikationsverfahren (1) nach Anspruch 1, das außerdem für ein zulässiges Paar D2D$_j$ und pro Endgerät CU$_i$ der Gesamtheit R$_j$ dieses Paars das Bestimmen eines Paars von Sendeleistungen, die dem Endgerät CU$_i$ und dem Paar D2D$_j$ zugeordnet sind, umfasst, derart, dass das Paar die Summe der Durchsätze des Endgeräts CU$_i$ und des Paars D2D$_j$ maximal macht.

3. Kommunikationsverfahren (1) nach Anspruch 2, wobei das Paar von Sendeleistungen, die dem Endgerät CU$_i$ und dem Paar D2D$_j$ zugeordnet sind, durch das folgende Gleichungssystem gegeben ist:

$$\left(P_i^{c*}, P_j^{d*}\right) = \begin{cases} \arg \max_{\left(P_i^c, P_j^d\right) \in \mathcal{P}_1} f\left(P_i^c, P_j^d\right), falls \frac{P_{max}g_{i,B}}{\sigma_N^2 + P_{max}h_{j,B}} \leq \xi_{i,min}^c \ oder \\ \arg \max_{\left(P_i^c, P_j^d\right) \in \mathcal{P}_2} f\left(P_i^c, P_j^d\right), falls \frac{P_{max}g_{i,B}}{\sigma_N^2 + P_{max}h_{j,B}} > \xi_{i,min}^c \ und \ \frac{P_{max}g_j}{\sigma_N^2 + P_{max}h_{i,j}} > \xi_{j,min}^d \ oder \\ \arg \max_{\left(P_i^c, P_j^d\right) \in \mathcal{P}_3} f\left(P_i^c, P_j^d\right), falls \frac{P_{max}g_{i,B}}{\sigma_N^2 + P_{max}h_{j,B}} > \xi_{i,min}^c \ und \ \frac{P_{max}g_j}{\sigma_N^2 + P_{max}h_{i,j}} \geq \xi_{j,min}^d \end{cases}$$

mit:

$$\mathcal{P}_1 = \{(P_{max}, P_1), (P_{max}, P_2)\},$$

$$\mathcal{P}_2 = \{(P_3, P_{max}), (P_4, P_{max})\},$$

$$\mathcal{P}_3 = \{(P_{max}, P_1), (P_{max}, P_2), (P_4, P_{max})\},$$

$$P_1 = \frac{\left(\sigma_N^2 + P_{max}h_{i,j}\right)\xi_{j,min}^d}{g_j},$$

$$P_2 = \frac{P_{max}g_{i,B} - \xi_{j,min}^c \sigma_N^2}{\xi_{i,min}^c h_{j,B}},$$

$$P_3 = \frac{P_{max}g_j - \xi_{j,min}^d \sigma_N^2}{\xi_{j,min}^d h_{i,j}},$$

$$P_4 = \frac{\left(\sigma_N^2 + P_{max}h_{j,B}\right)\xi_{i,min}^c}{g_{i,B}},$$

$$f\left(P_i^c, P_j^d\right) \equiv log_2(1 + \xi_i^c) + log_2\left(1 + \xi_j^d\right)$$

die Summenfunktion der Durchsätze eines Kandidatenendgeräts CU$_i$ und des Paars von Endgeräten D2D$_j$.

4. Kommunikationsverfahren (1) nach einem der Ansprüche 1 bis 3, wobei die Zulassungskontrolle für mehrere Paare D2D$_j$ von Kandidatenendgeräten mit D2D-Kommunikation wiederholt wird.

5. Kommunikationsverfahren nach einem der Ansprüche 1 bis 4, das außerdem das Bestimmen eines optimalen Endgeräts unter mehreren Endgeräten CU$_i$ einer Gesamtheit R$_j$ umfasst, wobei das optimale Endgerät jenes ist, das ein Kriterium für lokale Durchsatzverstärkung berücksichtigt, wobei die lokale Durchsatzverstärkung für ein Endgerät der Gesamtheit R$_j$ durch die Differenz zwischen einerseits der Summe der Durchsätze, die von diesem Endgerät bzw. dem Paar D2D$_j$ erhalten werden, wenn dieses Endgerät sein Betriebsmittel mit diesem Paar gemeinsam nutzt, und andererseits des Durchsatzes, der durch dieses Endgerät erhalten wird, wenn dieses Endgerät sein Betriebsmittel mit diesem Paar D2D$_j$ nicht gemeinsam nutzt, bestimmt wird.

6. Kommunikationsverfahren (1) nach Anspruch 5, kombiniert mit Anspruch 4, wobei die Bestimmung eines optimalen Endgeräts für alle disjunkten Gesamtheiten ausgeführt wird.

7. Kommunikationsverfahren (1) nach einem der Ansprüche 4 bis 6, das außerdem das gemeinsame Bestimmen optimaler Endgeräte für nicht disjunkte Gesamtheiten umfasst, die ermöglichen, eine maximale Zunahme des lokalen Durchsatzes mittels eines Gewichtungsoptimierungsalgorithmus zu erreichen.

**8.** Basisstation, SB, die dafür ausgelegt ist, ein Kommunikationsverfahren nach einem der Ansprüche 1 bis 7 auszuführen, und Folgendes umfasst:

- ein Mittel zum Kontrollieren der Zulassung des Paars D2D$_j$, das das Bestimmen einer Gesamtheit R$_j$ von bedienten Endgeräten CU$_i$, die Kandidaten für die gemeinsame Nutzung ihrer jeweiligen spektralen Betriebsmittel mit dem Paar D2D$_j$ sind, das unter der einzigen Bedingung der Berücksichtigung ihrer jeweiligen QoS-Kriterien durch das Kandidatenendgerät CU$_i$ und durch das Paar D2D$_j$ steht, **gekennzeichnet durch**
- ein Mittel zum Berechnen und Bestimmen, ob ein Endgerät CU$_i$ zu der Gesamtheit R$_j$ gehört, falls es das folgende Gleichungssystem erfüllt:

$$\begin{cases} 0 \leq \dfrac{\left(g_j \xi^c_{i,min} + h_{j,B} \xi^c_{i,min} \xi^d_{j,min}\right)\sigma^2_N}{g_j g_{i,B} - \xi^c_{i,min}\xi^d_{j,min}h_{i,j}h_{j,B}} \leq P_{max} \\[3ex] 0 \leq \dfrac{\left(h_{i,j} \xi^c_{i,min}\xi^d_{j,min} + g_{i,B}\xi^d_{j,min}\right)\sigma^2_N}{g_j g_{i,B} - \xi^c_{i,min}\xi^d_{j,min}h_{i,j}h_{j,B}} \leq P_{max} \end{cases}$$

mit:

$g_i$ Kanalverstärkung zwischen den Endgeräten des Paars D2D$_j$,
$g_{i,B}$ Kanalverstärkung zwischen dem Endgerät CU$_i$ und der Basisstation auf der Aufwärtsstrecke,
$h_{j,B}$ Kanalverstärkung der Störungsverbindung bei der Basisstation wegen des Senders des Paars D2D$_j$,
$h_{i,j}$ Kanalverstärkung der Störungsverbindung bei dem Empfänger des Paars D2D$_j$ wegen eines Endgeräts CU$_i$,
$\sigma_N$ Leistung des additiven Gaußschen weißen Rauschens auf jedem Kanal,
$P_{max}$ maximale Sendeleistung eines Endgeräts,
$\xi^d_{j,min}$ minimaler Pegel des SINR, das von dem Paar D2D$_j$ gefordert wird,
$\xi^c_{i,min}$ minimaler Pegel des SINR, das von einem Endgerät CU$_i$ gefordert wird.

**9.** Zugriffsnetz, das wenigstens eine Basisstation nach Anspruch 8 enthält.

**10.** Datenträger, der Programmbefehle enthält, die dafür ausgelegt sind, einen Kommunikationsverfahren nach einem der Ansprüche 1 bis 7 auszuführen, wenn das Programm in eine Basisstation, die dazu bestimmt ist, das Kommunikationsverfahren auszuführen, geladen wird und darin ausgeführt wird.


**Claims**

**1.** Method (1) of communication implemented by a base station, SB, of an access network to allocate spectral resources between terminals (CU, D2D) identified by the station, the station having allocated all its spectral resources to terminals CU$_i$ identified having a communication established via the base station, these terminals are termed served, comprising for any peer D2D$_j$ of terminals that are candidates to a D2D communication:

- a check of admission of the peer D2D$_j$ comprising the determination of a set R$_j$ of served terminals CU$_i$ that are candidates for the sharing of their respective spectral resources with the peer D2D$_j$ under the sole constraint of the compliance of the candidate terminal CU$_i$ and of the peer D2D$_j$ with their respective QoS criteria,

**characterized in that** a terminal CU$_i$ belongs to the set R$_j$ if it satisfies the following system of equations calculated at the base station:

$$\begin{cases} 0 \le \dfrac{(g_j \xi^c_{i,\min} + h_{j,B} \xi^c_{i,\min} \xi^d_{j,\min})\sigma_N{}^2}{g_j g_{i,B} - \xi^c_{i,\min} \xi^d_{j,\min} h_{i,j} h_{j,B}} \le P_{\max} \\[4mm] 0 \le \dfrac{(h_{i,j} \xi^c_{i,\min} \xi^d_{j,\min} + g_{i,B} \xi^d_{j,\min})\sigma_N{}^2}{g_j g_{i,B} - \xi^c_{i,\min} \xi^d_{j,\min} h_{i,j} h_{j,B}} \le P_{\max} \end{cases}$$

with:

$g_j$, the channel gain between the terminals of the peer D2D$_j$,
$g_{i,B}$, the uplink channel gain between the terminal CU$_i$ and the base station,
$h_{j,B}$, the channel gain of the interference link at the base station because of the transmitter of the peer D2D$_j$,
$h_{i,j}$, the channel gain of the interference link at the receiver of the peer D2D$_j$ because of a terminal CU$_i$,
$\sigma_N$, the power of the additive Gaussian white noise on each channel,
$P_{\max}$, the maximum transmission power of a terminal,
$\xi^d_{j,\min}$ the minimum SINR level requested by the peer D2D$_j$,
$\xi^c_{i,\min}$ the minimum SINR level requested by a terminal CU$_i$.

2. Method (1) of communication according to Claim 1, furthermore comprising, for an admissible peer D2D$_j$ and per terminal CU$_i$ of the set R$_j$ of this peer, a determination of a pair of transmission powers associated respectively with the terminal CU$_i$ and with the peer D2D$_j$ such that the pair maximizes the sum of the bitrates of the terminal CU$_i$ and of the peer D2D$_j$.

3. Method (1) of communication according to Claim 2, in which the pair of transmission powers associated with the terminal CU$_i$ and with the peer D2D$_j$ is given by the following system of equations:

$$(P_i^{c*}, P_j^{d*}) = \begin{cases} \arg\max\limits_{(P_i^c, P_j^d)\in \mathcal{P}_1} f(P_i^c, P_j^d) & \text{if} & \dfrac{P_{\max} g_{i,B}}{\sigma_N{}^2 + P_{\max} h_{j,B}} \le \xi^c_{i,\min} & \text{or} \\[4mm] \arg\max\limits_{(P_i^c, P_j^d)\in \mathcal{P}_2} f(P_i^c, P_j^d) & \text{if} & \dfrac{P_{\max} g_{i,B}}{\sigma_N{}^2 + P_{\max} h_{j,B}} > \xi^c_{i,\min} \ \text{and} \ \dfrac{P_{\max} g_j}{\sigma_N{}^2 + P_{\max} h_{i,j}} > \xi^d_{j,\min} & \text{or} \\[4mm] \arg\max\limits_{(P_i^c, P_j^d)\in \mathcal{P}_3} f(P_i^c, P_j^d) & \text{if} & \dfrac{P_{\max} g_{i,B}}{\sigma_N{}^2 + P_{\max} h_{j,B}} > \xi^c_{i,\min} \ \text{and} \ \dfrac{P_{\max} g_j}{\sigma_N{}^2 + P_{\max} h_{i,j}} \ge \xi^d_{j,\min} \end{cases}$$

with :

$$\mathcal{P}_1 = \{(P_{\max}, P_1), (P_{\max}, P_2)\},$$

$$\mathcal{P}_2 = \{(P_3, P_{\max}), (P_4, P_{\max})\},$$

$$\mathcal{P}_3 = \{(P_{\max}, P_1), (P_{\max}, P_{\max}), (P_4, P_{\max})\},$$

$$P_1 = \frac{(\sigma_N{}^2 + P_{\max} h_{i,j})\xi^d_{j,\min}}{g_j},$$

$$P_2 = \frac{P_{\max} g_{i,B} - \xi^c_{i,\min} \sigma_N{}^2}{\xi^c_{i,\min} h_{j,B}},$$

$$P_3 = \frac{P_{\max} g_j - \xi^d_{j,\min} \sigma_N^2}{\xi^d_{j,\min} h_{i,j}},$$

$$P_4 = \frac{(\sigma_N^2 + P_{\max} h_{j,B}) \xi^c_{i,\min}}{g_{i,B}},$$

$$f(P_i^c, P_j^d) \equiv \log_2(1 + \xi_i^c) + \log_2(1 + \xi_j^d)$$

the function which is the sum of the bitrates respectively of a candidate terminal $Cu_i$ and of the terminals peer $D2D_j$.

4. Method (1) of communication according to one of Claims 1 to 3, in which the admission check is repeated for several peers $D2D_j$ of terminals that are candidates to a D2D communication.

5. Method (1) of communication according to one of Claims 1 to 4, furthermore comprising a determination of an optimal terminal from among several terminals $CU_i$ of a set $R_j$, the optimal terminal being that which complies with a criterion of local bitrate gain, the local bitrate gain for a terminal of the set $R_j$ being determined by the difference between on the one hand the sum of the bitrates obtained respectively by this terminal and the peer $D2D_j$ when this terminal shares its resource with this peer and on the other hand the bitrate obtained by this terminal when this terminal does not share its resource with this peer $D2D_j$.

6. Method (1) of communication according to Claim 5 combined with Claim 4, in which the determination of an optimal terminal is performed for all the disjoint sets.

7. Method (1) of communication according to one of Claims 4 to 6, furthermore comprising a joint determination, for non-disjoint sets, of optimal terminals which make it possible to achieve a maximum increase of local bitrate by means of a weight optimization algorithm.

8. Base station, SB, adapted to implement a communication method according to one of Claims 1 to 7, comprising:

- a means for checking the admission of the peer $D2D_j$ comprising the determination of a set $R_j$ of served terminals $CU_i$ that are candidates for the sharing of their respective spectral resources with the peer $D2D_j$ under the sole constraint of the compliance of the candidate terminal $CU_i$ and of the peer $D2D_j$ with their respective QoS criteria, **characterized by**
- a means for calculating and determining whether a terminal $CU_i$ belongs to the set $R_j$ if it satisfies the following system of equations:

$$\begin{cases} 0 \leq \dfrac{(g_j \xi^c_{i,\min} + h_{j,B} \xi^c_{i,\min} \xi^d_{j,\min}) \sigma_N^2}{g_j g_{i,B} - \xi^c_{i,\min} \xi^d_{j,\min} h_{i,j} h_{j,B}} \leq P_{\max} \\[4mm] 0 \leq \dfrac{(h_{i,j} \xi^c_{i,\min} \xi^d_{j,\min} + g_{i,B} \xi^d_{j,\min}) \sigma_N^2}{g_j g_{i,B} - \xi^c_{i,\min} \xi^d_{j,\min} h_{i,j} h_{j,B}} \leq P_{\max} \end{cases}$$

with:

$g_j$, the channel gain between the terminals of the peer $D2D_j$,
$g_{i,B}$, the uplink channel gain between the terminal $CU_i$ and the base station,
$h_{j,B}$, the channel gain of the interference link at the base station because of the transmitter of the peer $D2D_j$,
$h_{i,j}$, the channel gain of the interference link at the receiver of the peer $D2D_j$ because of a terminal $CU_i$,
$\sigma_N$, the power of the additive Gaussian white noise on each channel,
$P_{\max}$, the maximum transmission power of a terminal,
$\xi^d_{j,\min}$ the minimum SINR level requested by the peer $D2D_j$,

$\xi^c_{i,min}$ the minimum SINR level requested by a terminal $CU_i$.

9. Access network comprising at least one base station according to Claim 8.

10. Information medium comprising program instructions adapted for the implementation of a communication method according to any one of Claims 1 to 7 when said program is loaded and executed in a base station intended to implement the communication method.

Pair 1

D2D_Tx$_1$ $\quad$ D2D_Rx$_1$

$\xi^d_{1,min}$

CU?

CU$_3$

$\xi^c_{3,min}$

CU$_2$

$\xi^c_{2,min}$

CU$_4$

$\xi^c_{4,min}$

CU$_1$

$\xi^c_{1,min}$

CU$_5$

$\xi^c_{5,min}$

CU$_N$

$\xi^c_{N,min}$

CU?

D2D_Tx$_M$ $\quad$ Pair M $\quad$ D2D_Rx$_M$

$\xi^d_{M,min}$

CU-BS link

D2D link

interferencer link

**Fig. 1**

$C=\{CU1,...CU_N\},D=\{D2D_1,...,D2D_M\}$

D2D$_j$

Rj= $\emptyset$

QoS $\quad$ Rj=\{?\} $\quad$ D2D$_j$ non adm.

2

D2D$_j$ adm.

1

**Fig. 2**

**Fig. 3a**

**Fig. 3b**

**Fig. 4a**

**Fig. 4b**

EP 2 907 339 B1

**Fig. 4c**

**Fig. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **JÄNIS ; KOIVUNEN ; RIBEIRO ; KORHONEN ; DOPPLER ; HUGL.** Interference-aware resource allocation for device-to-device radio underlaying cellular networks. IEEE, 2009
- Design Aspects of Network Assisted Device-to-Device Communications. **GÁBOR FODOR ; ERIK DAHLMAN ; GUNNAR MILDH ; STEFAN PARKVALL ; NORBERT REIDER ; GYÖRGY MIKLÓS ; ZOLTÁN TURÁNYI.** la revue Communications Magazine. IEEE, Mars 2012
- **K. DOPPLER ; M. RINNE ; C. WIJTING ; C. RIBEIRO ; K. HUGL.** Device-to-device communication as an underlay to lte-advanced networks. *IEEE Commun. Mag.,* 2009, vol. 47 (12), 42-49
- **M. ZULHASNINE ; C. HUANG ; A. SRINIVASAN.** Efficient resource allocation for device-to-device communication underlaying lte network. *Proc. IEEE 6th Int. Conf. on Wireless and Mobile Computing, Networking and Commun. (WiMob' 2010),* 2010, 368-375
- **D. WEST et al.** Introduction to graph theory. Prentice Hall, 2001
- **A. GJENDEMSJO ; D. GESBERT ; G. OIEN ; S. KIANI.** Optimal power allocation and scheduling for two-cell capacity maximization. *Proc. IEEE 4th Int. Symp. on Modeling and Optimization in Mobile, Ad Hoc and Wireless Networks,* 2006, 1-6